(19) Europäisches Patentamt / European Patent Office / Office européen des brevets

(11) **EP 2 687 020 B1**

(12) **FASCICULE DE BREVET EUROPEEN**

(45) Date de publication et mention
de la délivrance du brevet:
**24.04.2019 Bulletin 2019/17**

(21) Numéro de dépôt: **12710907.2**

(22) Date de dépôt: **16.03.2012**

(51) Int Cl.:
*H04N 5/359* (2011.01)     *H04N 5/378* (2011.01)

(86) Numéro de dépôt international:
**PCT/EP2012/054684**

(87) Numéro de publication internationale:
**WO 2012/126838 (27.09.2012 Gazette 2012/39)**

(54) **CAPTEUR D'IMAGES**

BILDAUFNEHMER

IMAGING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.03.2011 FR 1152265**

(43) Date de publication de la demande:
**22.01.2014 Bulletin 2014/04**

(73) Titulaire: **Commissariat à l'Énergie Atomique
et aux Énergies Alternatives
75015 Paris (FR)**

(72) Inventeurs:
• **ROSTAING, Jean-Pierre
F-38260 La Cote Saint André (FR)**
• **TCHGASPANIAN, Michaël
F-38330 Saint Ismier (FR)**
• **VERDANT, Arnaud
F-38110 La Tour du Pin (FR)**

(74) Mandataire: **Hautier, Nicolas
Cabinet Hautier
20, rue de la Liberté
06000 Nice (FR)**

(56) Documents cités:
**EP-A2- 0 905 971     US-A1- 2010 194 956**

**Description**

DOMAINE TECHNIQUE DE L'INVENTION

La présente invention concerne en général les capteurs optoélectroniques d'images organisés en matrices de pixels, et plus particulièrement les moyens électroniques de mesure de l'énergie de rayonnement capturée par chacun des pixels de la matrice.

ÉTAT DE LA TECHNIQUE

Un capteur optoélectronique d'images est un composant photosensible servant à convertir un rayonnement électromagnétique en un signal électrique. Le rayonnement électromagnétique considéré couvre généralement tout le spectre des longueurs d'ondes visibles. De nombreux capteurs sont cependant aussi conçus pour détecter d'autres gammes de longueurs d'ondes, par exemple plus courtes, dans l'ultra violet ou plus longues, dans l'infra rouge. Quelle que soit la gamme de longueurs d'ondes pour laquelle un capteur est conçu, son but ultime est de restituer fidèlement, sur toute sa surface, une image numérique dans une plage de fonctionnement la plus large possible allant des plus faibles aux plus fortes intensités qu'il doit pouvoir mesurer. C'est-à-dire, en permettant de convertir et de mesurer avec une résolution aussi élevée que possible le rayonnement électromagnétique capté. L'image restituée pourra alors être exploitée directement par tout système informatisé. Par exemple, le composant de base des appareils photo numériques produits depuis les années quatre vingt dix est un capteur d'images dans la gamme des longueurs d'ondes visibles.

D'abord produits sous forme de capteurs dits CCD, acronyme de l'anglais « charge coupled device », c'est-à-dire dispositif à couplage de charge, ceux-ci sont de plus en plus remplacés par des capteurs dits CMOS, acronyme de l'anglais « complementary metal oxide semiconductor » qui désigne la technologie la plus utilisée depuis de nombreuses années pour la production de circuits intégrés. Cette technologie permet d'obtenir simultanément des transistors complémentaires (C) à effet de champs du type métal-oxyde-semiconducteur (MOS). L'avantage principal étant alors que le capteur, s'il n'est pas complètement intégré, peut être tout au moins intimement imbriqué, au niveau de chaque pixel, sur une même puce, avec ses circuits de mesure et autres circuits électroniques de conversion, de stockage et d'interfaçage nécessaires à l'obtention d'une fonction électronique complète.

La résolution est un paramètre crucial des capteurs optoélectroniques d'images. De nombreux travaux de recherche et de développement ont déjà porté sur son amélioration qui doit pouvoir être obtenue alors même qu'une intégration toujours plus grande est aussi souhaitée. On connaît par exemple des capteurs comprenant des pixels de type auto réinitialisant, de l'anglais « self resetting pixel » qui permettent de concilier dans une certaine mesure ces deux impératifs. Ce type de capteur comprend pour chaque pixel :

- des moyens de conversion d'une énergie électromagnétique captée en un courant électrique proportionnel à la dite énergie ;

- une capacité d'intégration incluant des moyens de charge à un premier niveau électrique prédéterminé et de décharge contrôlée par le courant électrique proportionnel jusqu'à un second niveau électrique prédéterminé;

- des moyens de re-bouclage et de comptage permettant, d'une part, une répétition automatique des cycles de charges et de décharges et, d'autre part, le comptage du nombre de cycles survenant pendant un temps d'intégration déterminé.

Ce capteur comprend en outre des moyens de mesure d'une charge électrique résiduelle présente dans la capacité d'intégration à l'issue dudit temps d'intégration. Le nombre de cycles et de la mesure de la charge électrique résiduelle étant étroitement dépendant de l'énergie captée par les moyens de conversion, ils permettent d'estimer cette énergie pour chaque pixel.

Ce type de capteur a ainsi permis une amélioration sensible de la résolution de l'image obtenue. Un tel circuit est décrit dans une demande de brevet publiée le 5 août 2010 sous la référence US 2010/0194956 A1. Un tel circuit a néanmoins pour inconvénient d'être relativement complexe.

Un autre type de capteur est décrit dans la demande de brevet EP09005971 publiée le 30 mars 1999.

Il serait néanmoins particulièrement avantageux d'améliorer encore la qualité offerte par les capteurs sans augmenter sensiblement leur taille ou leur complexité.

La présente invention se propose d'apporter une solution répondant à cet objectif.

RÉSUMÉ

Un aspect de l'invention concerne un capteur d'images selon la revendication 1.

Ainsi l'invention a pour avantage d'utiliser pour la calibration des composants qui sont utilisés lors de la phase fonctionnelle. En particulier, la phase de calibration utilise les moyens de mesure utilisés pour la mesure de la charge résiduelle et utilise le courant électrique proportionnel (Id) généré par les moyens de conversion.

On remarque aussi que la mesure des inévitables dispersions de fabrication et d'implantation entre pixels, qui entraînent la formation d'un bruit spatial fixe qui est compensé à l'issue de la phase de calibration, se fait in situ, dans chacun des pixels, en n'utilisant que des composants qui sont par ailleurs tous utilisés fonctionnellement et en mesurant directement les paramètres électriques fonctionnels, ce qui évite d'introduire dans la compensation des facteurs externes qui viendraient autrement affecter la justesse de la calibration. Ceci n'est pas le cas de l'art antérieur notamment dans le document cité dans le chapitre sur l'état de la technique, c'est-à-dire dans la demande de brevet US 2010/0194956 A1 où il est fait notamment usage de sources de courant et d'un convertisseur analogique digital de référence qui sont dédiés à la calibration et ne sont pas réutilisés fonctionnellement.

De manière optionnelle et avantageuse, le capteur comprend dans chaque pixel un circuit monostable placé entre la sortie du comparateur et ledit interrupteur de réinitialisation. Il comprend également des interrupteurs placés entre l'interrupteur de réinitialisation et respectivement le circuit monostable ou la sortie du comparateur, pour, d'une part, relier directement la sortie du comparateur au transistor de réinitialisation dans une phase de calibration et d'autre part, relier la sortie du comparateur au transistor de réinitialisation via le circuit monostable dans une phase fonctionnelle.

Le circuit de rebouclage comprend le circuit monostoable.

L'utilisation d'un circuit monostable dans la boucle de rétro couplage des pixels auto réinitialisant permet d'assurer une grande stabilité et une sûreté supplémentaire de leur fonctionnement dans toute la plage des valeurs opérationnelles et environnementales pour lesquelles le capteur est conçu.

Un autre aspect de l'invention concerne un capteur d'images comprenant une pluralité de pixels, le capteur comprenant pour chaque pixel :

-   des moyens de conversion d'une énergie électromagnétique (E) captée par le pixel en un courant électrique proportionnel (Id) à ladite énergie;

-   une première capacité d'intégration Cpix incluant des moyens pour provoquer une charge de cette première capacité Cpix à un premier niveau électrique (Vdd) et une décharge de cette première capacité Cpix jusqu'à un second niveau électrique (Vréf), l'une parmi ladite décharge ou ladite charge étant contrôlée par le courant électrique proportionnel (Id);

-   des moyens de re-bouclage permettant une répétition automatique de charges et de décharges de la première capacité Cpix au cours de cycles de charges et de décharges et des moyens de comptage configurés pour compter le nombre de cycles survenant pendant un temps d'intégration déterminé (Tint).

Le capteur comprend également des moyens de mesure d'une charge électrique résiduelle présente dans la première capacité d'intégration Cpix à l'issue dudit temps d'intégration et des moyens de traitement, également désignés circuit de traitement, configurés pour fournir une valeur numérique représentative de l'énergie électromagnétique (E) captée en fonction dudit nombre de cycles et de ladite charge électrique résiduelle. De manière caractéristique le capteur comprend des moyens de calibration comprenant lesdits moyens de mesure, lesdits moyens de mesure étant configurés pour accéder aux valeurs spécifiques à chaque pixel des premier (Vdd) et second (Vréf) niveaux électriques, les moyens de calibration étant agencés pour prendre en compte ces valeurs spécifiques afin de corriger ladite valeur numérique représentative de l'énergie électromagnétique (E) captée, ladite valeur numérique étant fonction dudit nombre de cycles et de ladite charge résiduelle.

Ainsi, l'invention réutilise les moyens de mesure de la charge résiduelle pour compenser les dispersions de fonctionnement et de fabrication propres à chaque pixel de sorte à corriger le nombre de cycles intervenus et/ou la mesure de la charge électrique résiduelle en fin de temps d'intégration. L'invention permet ainsi d'augmenter significativement la fidélité avec laquelle l'énergie captée par les moyens de conversion est numérisée sans pour autant augmenter significativement la complexité et/ou la taille du capteur. La qualité de l'image obtenue est donc améliorée sans impacter sensiblement la densité d'intégration des capteurs.

Facultativement, un capteur selon l'invention peut comprendre au moins l'une quelconque des caractéristiques optionnelles suivantes :

-   Les moyens de calibration comprennent des interrupteurs agencés pour, d'une part, inhiber les moyens de re-bouclage dans une phase de calibration, et d'autre part, activer les moyens de re-bouclage dans un mode fonctionnel.

Ainsi, dans une première configuration des interrupteurs, l'invention permet d'exploiter les moyens de mesure pour effectuer la calibration. Dans une deuxième configuration des interrupteurs, l'invention permet de mesurer la charge résiduelle. La première configuration correspond à la phase de calibration et la deuxième configuration correspond au mode fonctionnel.

- Le capteur est configuré de sorte que, dans une phase de calibration, les moyens de mesure de la charge électrique résiduelle accèdent audites valeurs spécifiques à chaque pixel des premier (Vdd) et second (Vréf) niveaux électriques.

- Les premier (Vdd) et second (Vréf) niveaux électriques sont des niveaux électriques qui correspondent, éventuellement à une dispersion près, à des niveaux électriques nominaux. Ils sont qualifiés de niveaux électriques prédéterminés ou de niveaux électriques donnés. Typiquement, pour chaque pixel les valeurs spécifiques des premier (Vdd) et second (Vréf) niveaux électriques prédéterminés correspondent aux tensions nominales de 3,3 Volts et de 0,8 Volt respectivement. Comme indiqué par la suite, les valeurs réelles Vdd et Vréf dépendent en pratique de chaque pixel. Pour chaque pixel, l'écart entre les valeurs spécifiques des premier (Vdd) et second (Vréf) niveaux électriques prédéterminés est d'environ 2.5 Volts.

- Le convertisseur analogique numérique est ainsi avantageusement adapté afin d'obtenir une résolution des mesures convenant, à la fois à la mesure de la charge résiduelle et à la mesure des valeurs spécifiques à chaque pixel des premier (Vdd) et second (Vréf) niveaux électriques prédéterminés. Il est donc configuré pour participer au mode fonctionnel (également désigné phase fonctionnelle), en coopération avec les moyens de comptage de cycles, ainsi qu'au mode de calibration (également désigné mode de calibration).

- Les moyens de mesure communs comprennent un amplificateur adapté pour capturer la charge résiduelle d'un pixel et la transformer en une tension proportionnelle dans un mode fonctionnel, et adapté pour mesurer les premier et second niveaux électriques, durant une phase de calibration.

- Le capteur comprend des moyens de mémorisation. Il est configuré de sorte que lors d'une phase de la calibration, des valeurs spécifiques à chaque pixel des premier (Vdd) et second (Vréf) niveaux électriques prédéterminés et/ou de valeurs de correction à appliquer à chacun des pixels sont stockés dans les moyens de mémorisation pour être utilisés au cours d'une phase fonctionnelle d'acquisition d'une image par un utilisateur.

- Chaque pixel comprend un circuit monostable de rétro couplage configuré pour assurer une recharge de la capacité d'intégration jusqu'au premier niveau électrique prédéterminé (Vdd). Avantageusement, le circuit monostable assure une recharge stable de la capacité d'intégration jusqu'au premier niveau électrique prédéterminé (Vdd).

De préférence, chaque pixel comprend un circuit monostable de rebouclage configuré pour assurer une recharge de la première capacité d'intégration Cpix jusqu'au premier niveau électrique prédéterminé (Vdd).

- Les pixels sont disposés de sorte à former une matrice de pixels composée de colonnes et de lignes de pixels. Les moyens de mesure de la charge électrique résiduelle et des premier (Vdd) et second (Vref) niveaux électriques sont communs à l'une parmi une colonne ou une ligne de la matrice de pixels et sont utilisés en coopération avec des moyens de sélection de l'autre parmi une colonne ou une ligne de ladite matrice.
- Le capteur d'images comprend une deuxième capacité d'intégration Ccol configurée pour former avec l'amplificateur un circuit intégrateur de charge. La deuxième capacité d'intégration Ccol est indépendante de la tension appliquée à ses bornes. Elle produit ainsi une tension proportionnelle à la charge transférée par un pixel.
- La capacité d'intégration du circuit amplificateur est une capacité de type métal isolant métal (MIM).

De préférence, l'isolant de la capacité d'intégration est fait d'oxyde de silicium. De préférence, le métal est du type utilisé pour la réalisation de connexions du circuit intégré comprenant le capteur.
Avantageusement, ledit métal est du silicium polycristallin conducteur.

- Préférentiellement, les moyens de conversion comprennent une diode photo sensible.
- De préférence, le courant électrique proportionnel (Id) contrôle la décharge de la capacité d'intégration Cpix jusqu'au second niveau électrique prédéterminé (Vréf).
- Chaque pixel est de type auto réinitialisant.
- Le capteur comprend des moyens de sélection et d'isolation adaptés de manière à, dans chaque pixel, transférer aux moyens de mesure la charge électrique résiduelle contenue dans la première capacité d'intégration Cpix du pixel. Avantageusement, ce transfert s'effectue sans perte, l'intégralité de la charge résiduelle étant transférée.

- Le capteur est configuré de sorte à corriger ladite valeur numérique représentative de l'énergie électromagnétique (E) captée par chaque pixel en prenant en compte la valeur Qpix définie par l'équation suivante:

$$Qpix_{num} = 2^A \cdot \left( K + \left( \frac{F - Qb}{Qa - Qb} \right) \right)$$

dans laquelle :

- Qa et Qb sont des valeurs numériques représentatives des charges minimale et maximale respectivement atteintes par la capacité d'intégration Cpix (2) de chaque pixel, mesurés par les moyens de mesure (80) lors de la phase de calibration et s'exprimant en Coulombs avec :

$$Qa = Cpix(Vréf + Voffset)$$

$$Qb = Cpix \cdot Vdd$$

D est le nombre de bits d'un compteur compris dans les moyens de comptage (40) et comptant le nombre de cycles survenant pendant un temps d'intégration donné (Tint) ;

K est le nombre de cycles comptés par le compteur pendant un temps d'intégration donné (Tint) ;

A est le nombre de bits sur lesquels sont mesurées Qa et Qb.

Un autre aspect de l'invention concerne un appareil photo, une caméra, ou un dispositif de surveillance ou dispositif d'analyse comportant au moins un capteur selon l'une quelconque des caractéristiques précédentes.

Selon un autre aspect, l'invention porte sur un procédé selon la revendication 12.

Ainsi, après avoir effectué une étape de calibration en réutilisant les moyens de mesure de la charge, le procédé selon l'invention permet de compenser dans le mode fonctionnel les dispersions de fonctionnement et de fabrication propres à chaque pixel de sorte à améliorer la qualité de l'image acquise.

De préférence, préalablement à l'étape d'acquisition, on effectue plusieurs étapes de calibration.

Avantageusement, après l'étape de détermination de corrections à appliquer à chaque pixel et avant l'étape d'acquisition, on effectue une étape de stockage des corrections à appliquer à chacun des pixels.

BRÈVE DESCRIPTION DES FIGURES

Les buts, objets, ainsi que les caractéristiques et avantages de l'invention ressortiront mieux de la description détaillée ci-dessous illustrée par les dessins d'accompagnement suivants dans lesquels :

La FIGURE 1 décrit le principe de fonctionnement du circuit qui dans chaque pixel permet, en déchargeant une capacité d'intégration, de convertir en un signal électrique l'énergie lumineuse captée.
La FIGURE 2 décrit le principe de fonctionnement d'un circuit plus élaboré qui permet que la conversion puisse se faire avec une valeur de capacité d'intégration faible.
La FIGURE 3 est une vue globale d'un capteur d'images intégrant une matrice de pixels photosensibles selon l'invention.
La FIGURE 4, décrit comment l'invention est mise en oeuvre dans chaque pixel avec l'aide des circuits situés en pied de colonne de matrice de pixels.
La FIGURE 5 décrit la mémoire associée aux circuits périphériques et destinée à mémoriser toutes les corrections déterminées au cours d'une phase de calibration afin de normaliser le comportement des pixels en mode fonctionnel.
La FIGURE 6 illustre l'amélioration du fonctionnement du capteur apportée par les moyens de calibration selon l'invention.
La FIGURE 7 décrit un mode préféré de mise en oeuvre de l'invention qui concerne le transfert de la charge résiduelle d'un pixel vers le circuit de mesure situé en pied colonne de la matrice de pixels.

Les dessins joints sont donnés à titre d'exemples et ne sont pas limitatifs de l'invention.

DESCRIPTION DÉTAILLÉE DE L'INVENTION

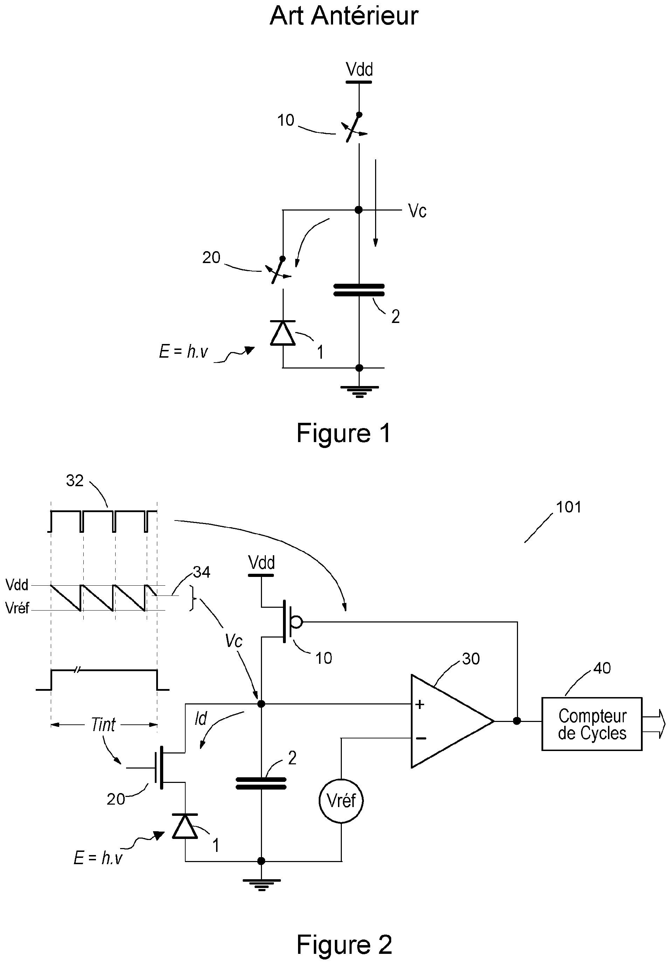

La **figure 1** décrit le principe de fonctionnement du circuit qui dans chaque pixel permet de convertir en un signal électrique l'énergie lumineuse captée, et plus généralement l'énergie du rayonnement électromagnétique reçu dans la gamme de longueurs d'ondes pour laquelle le capteur a été conçu. Comme montré sur cette figure chaque pixel comprend une photodiode 1. Polarisée en inverse, cette diode 1 génère un courant $Id$ proportionnel à l'énergie lumineuse totale reçue sous forme d'une addition de « grains » élémentaires d'énergie ou photons chacun de valeur $E=h.v$ où $h$ est la constante dite de Planck, soit : 6,62 $10^{-34}$ Joules.seconde et $v$ est la fréquence du rayonnement en cycles par seconde ou Hertz. L'énergie reçue $E$ s'exprime donc en Joules. On notera qu'en l'absence complète de lumière, la diode 1 génère cependant un faible courant d'obscurité ou de noir. En fonction des applications et des gammes de longueurs d'ondes qu'il faut pouvoir mesurer, la photodiode 1 pourra avantageusement être remplacée par une résistance photosensible ou un bolomètre.

Le principe de la mesure consiste à utiliser le courant $Id$ pour décharger une capacité Cpix 2 qui aura été préalablement chargée à une valeur prédéterminée. Ceci peut se faire très simplement en connectant à travers un interrupteur 10 la capacité Cpix 2 à une tension fixe d'alimentation Vdd pendant un temps minimum suffisant pour permettre sa charge rapide complète. On comprend alors qu'en fonction de la valeur du courant $Id$, qui est comme on l'a vu est proportionnelle à l'énergie lumineuse captée, on décharge plus ou moins vite la capacité. Ainsi par la simple mesure de la charge restante, à l'issue d'un temps d'intégration déterminé $Tint$, on peut obtenir l'énergie lumineuse captée par le pixel. Le durée de la décharge, et donc le temps d'intégration, est simplement contrôlé en rendant passant l'interrupteur 20 pendant le temps $Tint$.

Il s'avère cependant que la valeur de la capacité d'intégration Cpix que l'on peut obtenir dans la surface d'un pixel est trop petite pour satisfaire la plage de fonctionnement souhaitable en termes de minimum et de maximum d'énergies lumineuses mesurables. Avec les niveaux d'intégration atteints actuellement où un pixel a une surface, typiquement, de 30x30 microns carrés (1 micron = $10^{-6}$ mètre), une capacité de quelques pico Farads, i.e., $10^{-12}$ Farads est possible alors qu'il faudrait pouvoir disposer de valeurs de capacité d'au moins un ordre de grandeur supérieur soit quelques dizaines de pico Farads pour que la mesure puisse se faire dans une plage de fonctionnement suffisante au cours d'un cycle unique de charge et de décharge de Cpix comme expliqué ci-dessus.

Pour répondre à ce problème un circuit plus élaboré dont le schéma de principe est représenté sur la **figure 2** a donc dû être conçu. Comme on ne peut disposer d'une capacité d'une valeur suffisante dans chaque pixel la capacité existante Cpix est alors déchargée plusieurs fois, et possiblement un grand nombre de fois, d'autant plus souvent que l'énergie lumineuse captée par la diode 1 est importante et donc le courant de décharge $Id$ élevé. Dans ce circuit on laisse donc la tension Vc aux bornes de la capacité d'intégration évoluer entre la tension fixe de recharge de la capacité et une autre tension fixe inférieure dénommée Vréf. Quand la tension Vc atteint, au cours d'une décharge, la tension Vréf un circuit comparateur 30 le détecte et génère automatiquement un pulse de réinitialisation 32 qui entraîne à travers l'interrupteur 10 une recharge rapide de Cpix formant ainsi les moyens de rebouclage du circuit. Dans le cadre d'une mise en oeuvre de ce circuit avec une technologie CMOS l'interrupteur 10 est typiquement, comme montré sur la figure 2, un transistor MOSFET à canal P. Quand celui-ci devient très conducteur, pendant la durée des pulses négatifs de réinitialisation 32, une recharge rapide de Cpix, jusqu'à la tension d'alimentation Vdd, est obtenue. Dès que le transistor 10 redevient non conducteur une nouvelle décharge intervient. Les cycles de charge et de décharge se reproduisent donc automatiquement pendant toute la durée d'intégration $Tint$ à travers le rebouclage décrit ci-dessus. C'est-à-dire pendant tout le temps où le signal correspondant est appliqué sur un interrupteur 20 qui est fait dans cet exemple d'un transistor MOSFET à canal N. Rendu conducteur par l'application du signal $Tint$ sur sa grille le courant $Id$ est alors libre de circuler entre drain et source du transistor 20 pour décharger Cpix. Le nombre de cycles complets de charge et de décharge est compté, dans chaque pixel, par un circuit spécialisé formant des moyens de comptage comprenant un compteur 40. Ce nombre fournit donc une mesure de la quantité d'énergie lumineuse captée par la diode 1 pendant la durée d'intégration. Ce type de pixel qui permet l'utilisation d'une capacité d'intégration faible en la rechargeant automatiquement autant de fois qu'il est nécessaire au cours d'un cycle d'intégration est dit être un pixel auto réinitialisant 101. De préférence, ce type de pixel est également chargé de transmettre les impulsions au compteur 40. Ce type de pixel est astable pendant la période d'intégration contrôlée par un signal.

Avantageusement, pour augmenter la précision de la mesure, c'est-à-dire la plage de fonctionnement du capteur, on effectue une mesure de la tension résiduelle 34 restant aux bornes de Cpix lors de la dernière décharge interrompue par la retombée de $Tint$. Cet aspect de l'invention est discuté plus avant dans les figures suivantes.

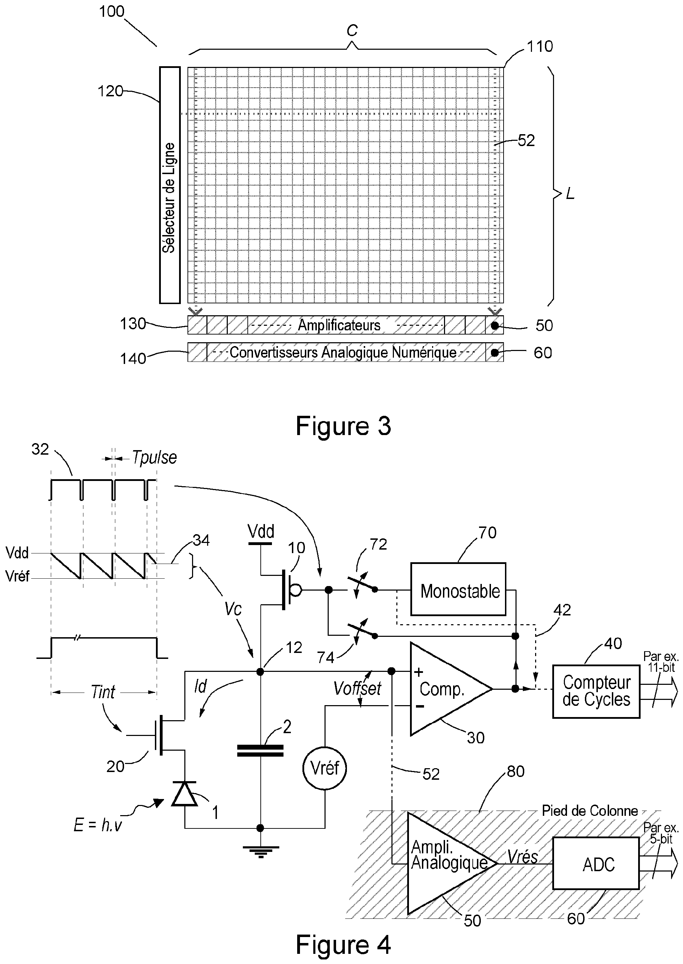

La **figure 3** illustre un capteur d'images 100 également désigné capteur optoélectronique d'images, intégrant une matrice 110 de pixels de type auto réinitialisant 101 comme décrit dans la figure précédente. Cette figure montre schématiquement l'organisation de la matrice 110 en lignes et colonnes de pixels. Le nombre de lignes L et le nombre de colonnes C de la matrice 110 sont définis par l'application pour laquelle le capteur a été conçu et essentiellement par la définition et le format des images que l'on veut obtenir. Typiquement, quelques centaines, pour les moins denses, jusqu'à plusieurs milliers de lignes et de colonnes peuvent s'avérer nécessaires. Ainsi, le nombre de pixels d'une matrice 110 s'exprime couramment en centaine de milliers, et pour les plus denses, en millions de pixels.

La capture de l'énergie lumineuse, et d'une façon générale du rayonnement électromagnétique, se fait d'une façon classique simultanément sur l'ensemble des pixels de la matrice 110 de façon à obtenir une image cohérente dans le temps, c'est-à-dire un instantané de cette image. La durée d'acquisition de cet instantané correspond au temps d'intégration *Tint* choisi. L'ensemble des composants montrés sur la figure 2 est répété pour chacun des pixels. De préférence, l'ensemble de ces composants est intégré dans chacun des pixels. Toutefois, en fonction des applications et des performances attendues d'un capteur d'images, il pourra être avantageux de partager ces composants entre pixels. En particulier, le compteur de pixel 40 pourra être partagé entre plusieurs pixels, voire entre tous les pixels d'une colonne de pixels, si les performances attendues font que l'acquisition d'une image peut se faire en sélectionnant successivement les lignes, ou des groupes de lignes, de la matrice de pixels.

La lecture de l'énergie capturée par chacun des pixels se fait d'une façon conventionnelle ligne après ligne et possiblement par groupes comme mentionné ci-dessus. Par exemple, un sélecteur 120 de lignes permet de parcourir l'ensemble de celles-ci, où l'ensemble des groupes de lignes, à l'issue du temps d'intégration afin de transférer le contenu des pixels de chacune d'elles aux circuits périphériques du capteur chargés d'acquérir l'image sous forme numérique. À cette fin, d'une façon classique, des circuits sont placés au pied de chaque colonne. Ils vont permettre notamment l'acquisition, et le transfert, ligne après ligne, de la valeur des compteurs individuels 40.

On place au pied de chaque colonne un convertisseur 60. Il faut donc autant de convertisseurs que de colonnes C dans la matrice 110 de pixels. De préférence, on prévoit également pour chaque colonne C un amplificateur 130. Les amplificateurs 130 sont placés en pied de colonne C. Ils forment la rangée 130. Sont seuls représentés sur la figure 3 la rangée d'amplificateurs analogiques 130 et la rangée de convertisseurs analogique numérique 140. Les rôles des convertisseurs 60 et des amplificateurs 50 sont décrits ci-après dans la figure 4. Ici il convient de remarquer que l'organisation de la matrice 110 de pixels décrite ci-dessus peut tout aussi bien s'envisager en intervertissant le rôle des lignes L et des colonnes C. Auquel cas il y aurait sélection de colonnes à l'aide d'un circuit de type 120 et les amplificateurs 130 et convertisseurs analogiques numériques 140 seraient alors placés à l'une ou l'autre extrémité des lignes.

Le principe de fonctionnement du circuit de la **figure 4** est le même que celui de la figure 2. Toutefois, plusieurs améliorations y sont apportées en vue de répondre aux objectifs de l'invention. Elles sont décrites ci-après.

L'invention prévoit des moyens de détermination de la charge ou tension résiduelle 34 de la dernière décharge interrompue, comme on l'a vu précédemment, à la fin de la période d'intégration par la retombée du signal *Tint*. Ces moyens comprennent des moyens de mesure 80 configurés pour permettre, entre autres, d'effectuer une mesure de cette charge électrique résiduelle 34.

Les moyens de mesure 80, comprennent en particulier un amplificateur analogique 50, disposé au pied de chaque colonne, pour permettre cette mesure. Lorsqu'une ligne de pixels est sélectionnée en vue du transfert aux circuits périphériques des informations capturées pendant la phase d'intégration, chaque entrée d'amplificateur 50 se trouve connectée temporairement, par l'intermédiaire d'une connexion commune à tous les pixels d'une colonne 52, au noeud interne 12 du pixel situé à l'intersection avec la ligne sélectionnée, donnant ainsi accès à sa charge électrique résiduelle. Les moyens de mesure comprennent également un convertisseur analogique numérique 60 en sortie de l'amplificateur 50. Le convertisseur 60 est également situé en pied de colonne. Il est commun à une colonne de pixels. Le rôle de l'amplificateur 50 est d'isoler le pixel et de présenter au convertisseur analogique numérique 60 une tension appropriée *Vrés,* proportionnelle à la charge électrique résiduelle observée sur le noeud 12, de façon à permettre l'encodage numérique dans les meilleures conditions. Combiné avec la valeur du compteur de cycles 40, le codage numérique de la tension *Vrés* augmente très sensiblement la plage de fonctionnement du capteur.

À titre d'exemple, il est courant que l'on veuille coder l'énergie capturée dans chaque pixel sur deux octets soit 16 bits, pour pouvoir différentier $2^{16}$, soit en décimal, approximativement soixante quatre mille valeurs différentes de niveaux d'énergie reçue. Pour atteindre ce résultat, un compromis de conception du pixel tenant compte notamment : de la valeur de la capacité d'intégration Cpix, des tensions mises en jeu et du temps nécessaire de recharge à chaque cycle ; consiste à mettre en oeuvre un compteur binaire de 11 bits capable donc de compter entre 0 et 2047 et qui représentent les poids forts du codage. Dans cet exemple le convertisseur analogique numérique 60 doit pouvoir apporter les 5 bits supplémentaires de poids faibles qui permettront que le codage puisse se faire sur un total de 16 bits. La tension résiduelle est alors codée sur $2^5$ soit 32 niveaux par le convertisseur 60. En fonction de l'application de l'invention, de la technologie et des composants utilisés, de nombreux autres compromis sont évidemment possibles sans déroger à l'invention.

De manière particulièrement avantageuse, l'autre utilisation des amplificateurs 50 et convertisseurs 60 compris dans les moyens de mesure 80 de la charge résiduelle, à trait à l'amélioration de l'homogénéité du comportement du capteur sur toute sa surface et à sa fidélité.

Chaque pixel est légèrement différent de son voisin en raison notamment des imperfections, dispersions et, en général, des aléas de fabrication. Les autres paramètres qui affectent plus globalement le fonctionnement d'un capteur sont les conditions environnementales notamment la température et les tensions d'alimentations fournies au capteur et distribuées localement à chaque pixel avec des chutes de tension différentes.

Le résultat de toutes ces dispersions est un bruit spatial fixe dont une partie au moins, celle correspondant à sa conception, à son implantation physique et à sa fabrication, est propre à chaque capteur et constitue sa « signature » également désignée « carte d'identité ». Ce bruit spatial fixe ou BSF peut se constater particulièrement dans les zones « sombres » c'est-à-dire celles recevant peu ou pas d'énergie de rayonnement.

Dans le cadre du développement de la présente invention, il s'est avéré que les dispersions de fonctionnement et de fabrication propres à chaque pixel peuvent influencer significativement la qualité de la numérisation de l'énergie électromagnétique captée par chaque photodiode. Ces dispersions sont notamment particulièrement préjudiciables pour des prises de vues de nuit par exemple avec des capteurs dont la plage de fonctionnement se situe dans l'infrarouge.

En pratique, dans un pixel auto réinitialisant selon l'invention comme décrit en figure 4, ce sont : la valeur de la capacité Cpix 2, les tensions d'alimentation ou de référence locales telles que Vdd et Vréf, le décalage en tension entre les entrées différentielles du comparateur 30 (paramètre souvent désigné sous son vocable anglais d'« offset ») qui constituent les principaux contributeurs au bruit spatial fixe et qui se trouvent alors noyés dans le codage de l'énergie reçue affectant possiblement aussi bien le compte du nombre de cycles que le codage de la tension résiduelle.

L'invention comprend des moyens de calibration, également désignés circuits de calibration, comprenant les moyens de mesure 80 précédemment décrits. Les moyens de mesure 80 notamment le convertisseur analogique numérique 60 et avantageusement l'amplificateur 50, situés au pied de chaque colonne, permettent de s'affranchir, sinon en totalité tout au moins dans une grande mesure, des dispersions de fonctionnement et de fabrication propres à chaque pixel introduisant le bruit spatial fixe propre à chaque capteur.

Ainsi, les moyens de mesure sont communs aux moyens de détermination de la charge électrique résiduelle en fin de temps d'intégration et aux moyens de calibration. Ils sont donc exploités à la fois en mode fonctionnel et à la fois lors de la phase de calibration. Le mode fonctionnel, ou phase fonctionnelle, désigne le mode de fonctionnement opérationnel du capteur lors de son utilisation, c'est à dire le mode dans lequel le capteur capte de l'énergie électromagnétique pour numériser une image que l'utilisateur souhaite acquérir. Typiquement, la phase fonctionnelle correspond à une phase de prise d'au moins une vue par un utilisateur. Dans le mode fonctionnel, les moyens de calibration ne sont pas exploités. Le mode de calibration également désigné phase de calibration n'a quant à lui que pour but d'identifier le bruit spatial fixe propre à chaque pixel. De manière générale il détermine la signature propre à chaque capteur. Il n'a pas pour objet de numériser une image que l'utilisateur souhaite acquérir et exploiter

Au cours de la phase de calibration préalablement à son utilisation en mode fonctionnel, les moyens de mesure 80 communs, en particulier le convertisseur 60 et l'amplificateur 50 sont ainsi utilisés pour mesurer, au niveau de chaque pixel, la valeur réelle constatée de deux paramètres cruciaux de son fonctionnement et qui intègrent les dispersions discutées ci-dessus.

L'un de ces paramètres cruciaux est la charge minimale atteinte par la capacité Cpix 2 lors d'une décharge. Ce niveau de décharge dépend de la valeur Vréf distribuée à ce pixel. Il dépend aussi du décalage en tension *Voffset* qui existe entre les entrées différentielles du comparateur 30. Il varie légèrement d'un comparateur à l'autre. En effet, au cours d'une décharge, c'est quand la tension Vc aux bornes de Cpix descend en dessous de Vréf, et en tenant compte du décalage en tension des entrées différentielles, que le comparateur bascule pour provoquer la recharge rapide de Cpix jusqu'à la tension d'alimentation Vdd, par exemple à travers le transistor 10 rendu fortement conducteur par l'application sur sa grille du signal pulsé 32.

On notera ici que l'invention fait usage d'un circuit monostable 70, déclenché sur le basculement du comparateur 30, afin de contrôler précisément la durée Tpulse des pulses 32 de façon à garantir que dans les pires conditions de fonctionnement la recharge de Cpix se fera toujours complètement, jusqu'à toujours atteindre Vdd, ceci afin de ne pas ajouter un facteur supplémentaire aux causes de dispersions mentionnées ci-dessus. Ainsi, la charge de la capacité Cpix 2 sera complète, sous réserve que la constante de temps de charge de Cpix à travers l'interrupteur 10 soit bien inférieure à Tpulse, par exemple dix fois inférieure.

L'utilisation du circuit monostable 70 garantit en outre la stabilité de la boucle de rétro couplage composée par le comparateur 30, le circuit monostable 70 et le transistor interrupteur 10 constituant les moyens de rebouclage de chaque pixel auto réinitialisant. En effet, l'assurance de toujours remonter jusqu'à Vdd le potentiel du noeud 12 connecté à l'entrée du comparateur 30, l'autre entrée étant reliée à la tension de référence Vref, évite toute oscillation autour de Vref. Ainsi, la durée du rétro couplage dépend essentiellement du temps de basculement du circuit monostable qui est ajustée indépendamment. En particulier, elle ne dépend ni de la tension effective de basculement ni de la vitesse du comparateur. Le basculement du comparateur 30 entraîne aussi l'incrément du compteur de cycles 40. Le compteur 40 peut être commandé directement par le comparateur 30 ou, optionnellement, de préférence, par le signal pulsé 42 issu du monostable 70. Cette alternative est représentée en pointillés 42 sur la figure 4. Le circuit monostable 70 améliore ainsi la robustesse du capteur et garantit en pratique le bon fonctionnement de la boucle de rétro couplage dans toute la plage de fonctionnement pour laquelle le capteur est conçu.

Pour pouvoir mesurer la tension minimale Vc et donc la charge minimale atteinte par la capacité Cpix 2 en fonctionnement à la fin d'une décharge, le circuit électronique d'un pixel selon l'invention comprend des interrupteurs permettant de passer du mode fonctionnel au mode calibration à volonté. Commandés globalement par la logique de contrôle du capteur (non représentée) ces interrupteurs sont, dans un mode préféré de mise en oeuvre de l'invention, au nombre de deux dans chaque pixel. Il s'agit des interrupteurs référencés 72 et 74 sur la figure 4. En mode fonctionnel l'interrupteur 72 est fermé et l'interrupteur 74 ouvert de façon à connecter normalement la sortie du monostable à la grille du transistor 10 qui assure la charge rapide de Cpix pendant la durée contrôlée Tpulse. En phase de calibration, pour pouvoir réaliser la mesure de la charge minimale spécifique d'un pixel, l'interrupteur 72 est ouvert et l'interrupteur 74 est fermé de façon à reboucler la sortie de comparateur 30 directement sur la grille du transistor 10. De cette façon, la boucle ainsi créée maintient le noeud 12 à la tension minimale atteinte normalement en fin de décharge. La tension Vc correspondante, c'est-à-dire Vréf+Voffset, peut être alors mesurée par le convertisseur 60, de la même façon que la tension résiduelle *Vrés* l'est en mode fonctionnel à l'issue de la période d'intégration *Tint,* quand la ligne de pixels correspondante est sélectionnée.

Ainsi, les interrupteurs 72 et 74 coopèrent avec lesdits moyens de mesure 80 communs pour mesurer la charge électrique résiduelle et pour mesurer les valeurs Vdd et Vréf spécifiques à chaque pixels afin d'assurer la calibration.

Les valeurs spécifiques à chaque pixel des premier et second niveaux électriques prédéterminés sont les valeurs Vdd et Vréf propres à chaque pixel considéré.

L'autre de ces paramètres cruciaux au fonctionnement d'un pixel est la charge maximale atteinte par la capacité Cpix 2 lors d'une charge. Ce paramètre peut être mesuré en phase de calibration avec les interrupteurs placés comme en mode fonctionnel, c'est-à-dire : l'interrupteur 72 fermé et l'interrupteur 74 ouvert, en maintenant fermé le transistor 20 afin qu'aucune décharge ne puisse se produire et en forçant un mode de fonctionnement astable du circuit 70 de façon à ce que la capacité Cpix 2 soit régulièrement rechargée. La valeur maximale spécifique au pixel est alors mesurée comme précédemment par le convertisseur 60 en pied de colonne. De préférence, il existe aussi (non représenté) un transistor en parallèle sur le transistor 10 qui permet de pré charger toutes les capacités Cpix avant intégration. Il est normalement non conducteur pendant toute la période d'intégration et le transfert de la charge électrique résiduelle. Ainsi un interrupteur complémentaire (reset) est configuré pour charger ladite première capacité d'intégration Cpix.

Dans un mode de réalisation alternatif, l'interrupteur de réinitialisation 10 et/ou l'interrupteur complémentaire sont configuré pour décharger la première capacité d'intégration Cpix. Ainsi, le capteur est configuré de sorte à ce que les moyens de calibration, dans la phase de calibration, commandent les moyens de rebouclage pour établir successivement la charge de la première capacité du pixel au premier puis au second niveaux électriques (Vdd, Vréf), en utilisant ledit courant électrique proportionnel (Id) traversant lesdits moyens de conversion pour décharger ladite première capacité d'intégration Cpix et en utilisant ledit interrupteur de réinitialisation et/ou un interrupteur complémentaire (reset) pour décharger ladite première capacité d'intégration Cpix.

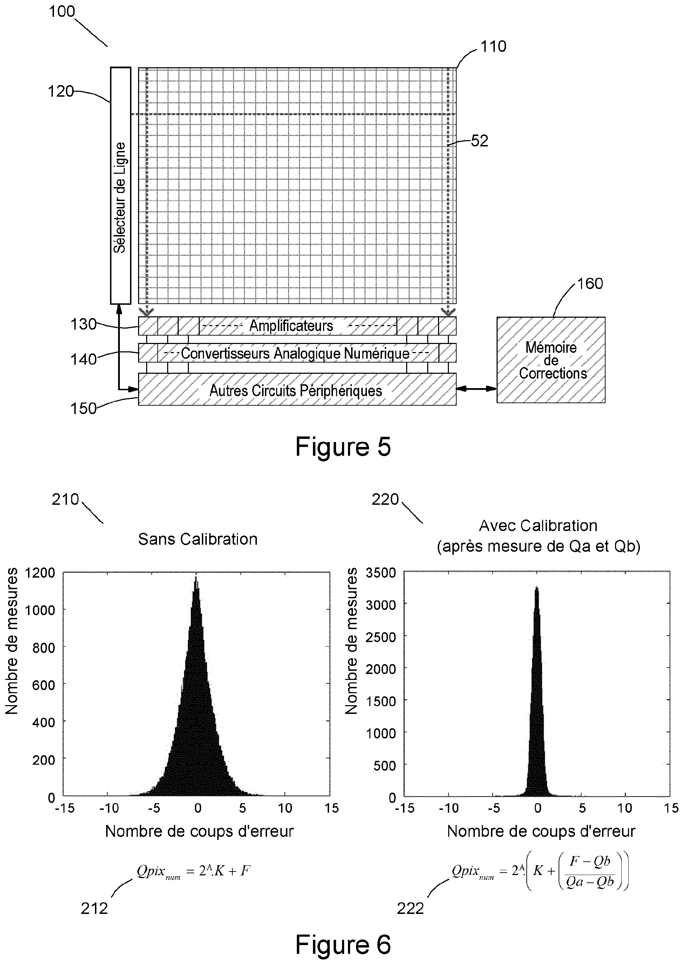

Comme montré sur la **figure 5,** associée à la matrice 110 de pixels et à tous ses circuits périphériques: sélecteur de ligne 120, amplificateurs 130, convertisseurs 140, et autres circuits périphériques 150, on implante aussi dans le capteur des moyens de mémorisation 160, typiquement une mémoire, capables de mémoriser toutes les corrections qu'il faut apporter aux mesures effectuées en mode fonctionnel pour normaliser le comportement des pixels. Sur la base des deux mesures précédentes de charges maximum et minimum faites en mode calibration sur l'ensemble des pixels, ligne après ligne, on dispose en effet de toutes les informations nécessaires pour générer une matrice de corrections des mesures effectuées en mode fonctionnel.

On peut stocker dans la mémoire 160 autant de corrections à effectuer qu'il y a de pixels. Auquel cas il y aura, par exemple, une correspondance un pour un entre le nombre de lignes et de colonnes de la matrice et l'organisation de la mémoire qui devra, pour une adresse donnée de ligne, pouvoir sortir simultanément autant de corrections qu'il y a de colonnes dans la matrice. Ce, afin de pouvoir corriger à la volée les lectures faites en mode fonctionnel, ligne après ligne, comme expliqué précédemment.

Pour ne pas avoir à implanter une mémoire 160 de trop grande taille la correction pourra aussi se faire moins finement. Entre autres possibilités, on peut décider de n'avoir qu'une correction par rangée. Par exemple, c'est la moyenne ou la médiane des corrections mesurées pour cette rangée que l'on appliquera à tous les pixels de la rangée. De nombreux autres schémas de correction sont possibles avec le système de l'invention comme d'appliquer une correction moyenne sur des groupes de pixels spatialement proches, par exemple des groupes de 16 correspondants à quatre lignes et quatre colonnes consécutives.

La **figure 6** illustre l'amélioration apportée par la calibration au fonctionnement du capteur. Dans cette figure Qa représente la charge minimale et Qb la charge maximale atteintes par Cpix, charges spécifiques à chaque pixel et qui sont mesurées à l'aide de l'amplificateur 50 et du convertisseur 60, en mode calibration, comme expliqué précédemment. La charge minimale vaut donc :

$$Qa = Cpix(Vréf + Voffset)$$

et la charge maximale :

$$Qb = Cpix.Vdd$$

Elles sont mesurées avec une définition correspondant à celle du convertisseur 60, d'une façon générale sur A bits, et donc avec une précision correspondant à $2^A$ niveaux de codage différents. De préférence, chaque valeur Qa et Qb est évaluée N fois pour s'affranchir d'erreurs statiques avant d'être mémorisée.

Les histogrammes 210 et 220 représentent les écarts simulés autour de la valeur nominale, respectivement, sans et après calibration. L'axe des abscisses illustre le nombre de coups d'erreur ce qui reflète la dispersion. L'axe des ordonnées illustre le nombre de mesures. Les équations 212 et 222 représentent, respectivement, la charge sans et avec correction appliquée.

Equation 212 :

$$Qpix_{num} = 2^A.K + F$$

Equation 222 :

$$Qpix_{num} = 2^A.\left( K + \left( \frac{F - Qb}{Qa - Qb} \right) \right)$$

Dans ces équations, K est le nombre de cycles comptés par le compteur de cycles 40. D'une façon générale le compteur comprend D bits permettant de compter de 0 à $2^D-1$ cycles. F est la fraction analogique mesurant la charge électrique résiduelle à la fin de la période d'intégration encodée par le convertisseur dans une plage allant de 0 à $2^A-1$ niveaux comme déjà indiqué ci-dessus. Dans l'exemple de la figure 4, D et A correspondent respectivement à 11 et 5 bits pour permettre un encodage des valeurs capturées par la matrice de pixels sur un total de 16 bits.

On constate bien une réduction très significative du BSF après calibration 220. L'histogramme sans calibration 210 est dispersé sur une largeur de +/- 5 et réduit, après calibration 220, à une largeur de +/-1

Un exemple de correction avec A = 5 soit 32 niveaux, lors d'une intégration sur un pixel (i,j) situé à l'intersection de la ligne i et de la colonne j, est le suivant :

- Après numérisation par le convertisseur analogique numérique (60) :

$$Qpix = (K+F/32).$$

- Qpix devient après correction :

$$Qpixn = K(Qan-Qbn)+(F-Qbn)x32/(Qan-Qbn)$$

qui exprime la conversion normalisée de la charge électrique résiduelle.

Un exemple numérique particulier avec K = 980 ; F = 12 ; Qan = 29.73 et Qbn = 2.35, est :

$$Qpixn = 980x27.38+(12-2.35)x32/27.38 = 26832.4+281.42 = 27113.82$$

Alors que si il n'y avait pas eu de calibration :

$$Qpixn = 980x32+12 = 31372$$

Comme déjà mentionné précédemment, lors de la calibration Qa et Qb sont évalués plus finement en accumulant le résultat de plusieurs mesures.

En pratique, le compteur donne une valeur numérique sur A bits et permet donc de distinguer 2 puissance A valeurs différentes : de 0 à $2^A$-1 Qa et Qb sont des valeurs numériques représentatives des charges minimale et maximale atteintes par Cpix et s'expriment en Coulombs.

De manière simplifiée, la calibration consiste à faire d'abord l'acquisition d'une image noire, c'est-à-dire sans aucune illumination du capteur. En raison des dispersions, un même niveau de noir n'est pas obtenu dans chaque pixel. En mesurant les charges minimale Qa et maximale Qb de chaque pixel, respectivement dépendantes de Vdd et de Vréf, on obtient le bruit spatial fixe. On peut alors appliquer l'équation 222 pour le compenser.

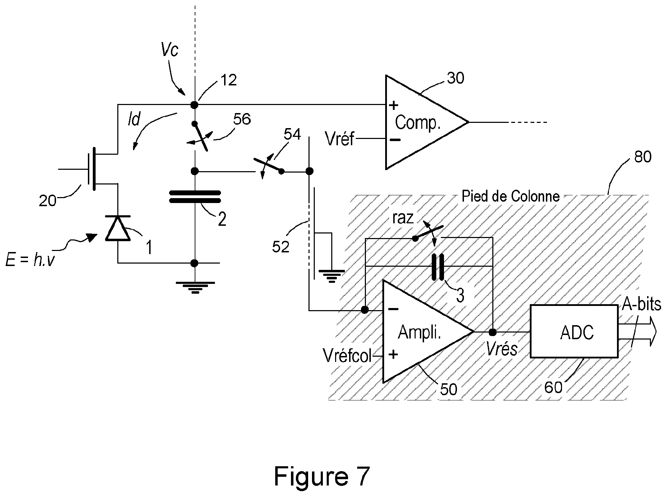

La **figure 7** décrit un mode préféré de mise en oeuvre de l'invention qui concerne le transfert de la charge électrique résiduelle d'un pixel vers le circuit de mesure 80 situé en pied de colonne comprenant l'amplificateur 50 et le convertisseur 60.

L'amplificateur 50 est dans ce cas un amplificateur différentiel qui forme un circuit intégrateur avec une capacité Ccol 3 connectée entre la sortie et l'entée négative de l'amplificateur 50. La capacité Ccol 3 appartient ainsi aux moyens de mesure 80 communs de la charge électrique résiduelle et des valeurs spécifiques à chaque pixel. Située en pied de colonne où les contraintes de surface occupée sont moins importantes que dans la matrice de pixel, la capacité Ccol 3 peut être une capacité à faible densité. Elle est avantageusement réalisée sous forme d'un empilement de couches de type métal/isolant/métal (MIM), l'une ou l'autre, voire les deux couches métalliques peuvent aussi être remplacée par du silicium polycristallin conducteur. L'avantage est alors que la capacité Ccol 3 bénéficie d'une très bonne linéarité au contraire de la capacité Cpix 2, qui est plus dense afin de minimiser l'encombrement dans le pixel, mais dont la valeur de capacité varie beaucoup plus quand la tension à *Vc* ses bornes varie. La linéarité de la capacité Cpix, c'est-à-dire l'indépendance de la valeur de sa capacité de stockage à la tension présente à ses bornes, est un contributeur important à l'obtention d'une bonne linéarité entre l'énergie captée du rayonnement et sa conversion en des valeurs électriques proportionnelles.

La charge électrique résiduelle contenue dans la capacité Cpix 2 peut être transférée sans perte dans la capacité Ccol 3, à l'issue de la période d'intégration quand la ligne de pixels correspondante est sélectionnée et la capacité Cpix 2 isolée du reste du pixel à l'aide des interrupteurs 54 et 56. Ce en dépit de la relativement forte capacité de la connexion qui relie tous les pixels d'une même colonne 52.

Ainsi, la tension *Vrés* est bien proportionnelle à la charge électrique résiduelle de Cpix, c'est-à-dire Qpix, et peut être numérisée avec précision par le convertisseur analogique numérique 60. Elle vaut : *Vrés* = -Qpix/Ccol. Valeur qui est convertie par le convertisseur analogique numérique 60.

Après que les valeurs numériques ont été transférées aux circuits périphériques 150 de la figure 5 l'intégrateur peut être remis à zéro à l'aide de l'interrupteur raz. De la même façon, le contenu du compteur de cycles de la figure 4 ayant été transféré, il est également remis à zéro avant qu'un autre cycle d'intégration n'intervienne.

Par les nombreuses caractéristiques décrites précédemment, l'invention permet ainsi d'améliorer significativement la qualité des images numérisées.

L'invention s'applique de manière particulièrement avantageuse pour les matrices de pixels nécessitant une dynamique élevée dans le domaine de l'infrarouge. Elle offre des améliorations également très significatives également dans d'autres gammes du spectre électromagnétique telles que le visible ou l'ultra violet.

## Revendications

1. Capteur (100) d'images comprenant une pluralité de pixels et comprenant pour chaque pixel :

   - des moyens de conversion (1) d'une énergie électromagnétique (E) captée par le pixel en un courant électrique proportionnel (Id) à ladite énergie;
   - une première capacité d'intégration Cpix (2) reliée à un interrupteur de réinitialisation (10) et des moyens (20) agencés pour provoquer une charge de cette première capacité d'intégration Cpix (2) jusqu'à un premier niveau électrique (Vdd) et une décharge de cette première capacité d'intégration Cpix (2) jusqu'à un second niveau électrique (Vréf), l'une parmi ladite décharge ou ladite charge étant réalisée en utilisant le courant électrique proportionnel (Id), l'autre parmi ladite charge ou ladite décharge étant réalisée en utilisant l'interrupteur de réinitialisation (10) ;
   - des moyens de re-bouclage permettant une répétition automatique de charges et de décharges de la première capacité d'intégration Cpix (2) au cours de cycles de charges et de décharges, les moyens de rebouclage incluant un comparateur (30) dont une des entrées est reliée à la capacité d'intégration Cpix, la sortie du comparateur étant reliée audit interrupteur de réinitialisation (10) ; des moyens de comptage (40) étant configurés pour compter le nombre de cycles de charges et de décharges survenant pendant un temps d'intégration donné (Tint) sur la première capacité d'intégration Cpix (2) ; le capteur (100) comprenant également des moyens de mesure (80) d'une charge électrique résiduelle (34) présente dans la première capacité d'intégration Cpix (2) à l'issue dudit temps d'intégration et des moyens de traitement (150) configurés pour fournir une valeur numérique représentative de l'énergie électromagnétique (E) captée en fonction dudit nombre de cycles de charges et de décharges et de ladite charge électrique résiduelle (34);

le capteur comprend des moyens de calibration, **caractérisé en ce que** lesdits moyens de calibration sont configurés pour, dans une phase de calibration :

- commander les moyens de rebouclage pour que lesdits moyens (20) agencés pour provoquer une charge de la première capacité d'intégration Cpix (2) jusqu'au premier niveau électrique (Vdd) et une décharge de la première capacité d'intégration Cpix (2) jusqu'au second niveau électrique (Vréf) établissent successivement la charge de la première capacité d'intégration Cpix du pixel au premier puis au second niveaux électriques (Vdd, Vréf), en utilisant ledit courant électrique proportionnel (Id) traversant lesdits moyens de conversion (1) pour décharger ou charger ladite première capacité d'intégration Cpix et en utilisant ledit un interrupteur de réinitialisation (10) et/ou un interrupteur complémentaire pour charger ou décharger ladite première capacité d'intégration Cpix ; et
- mesurer, en utilisant lesdits moyens de mesure (80), les premier et second niveaux électriques établis ; et

**en ce qu'**il comprend des moyens de mémorisation (160) configurés pour mémoriser lors de la phase de calibration, des valeurs spécifiques à chaque pixel correspondant auxdits premier (Vdd) et second (Vréf) niveaux électriques et/ou des valeurs de correction calculées à partir desdites valeurs spécifiques, et **en ce qu'**il est configuré de sorte à utiliser, dans une phase fonctionnelle, lesdites valeurs mémorisées propres à chaque pixel pour corriger ladite valeur numérique représentative de l'énergie électromagnétique (E) captée.

2. Capteur (100) d'images selon la revendication 1, comprenant dans chaque pixel un circuit monostable (70) placé entre la sortie du comparateur et ledit interrupteur de réinitialisation (10) et comprenant des interrupteurs (72, 74) placés entre l'interrupteur de réinitialisation (10) et respectivement le circuit monostable (70) ou la sortie du comparateur (30), pour, d'une part, relier directement la sortie du comparateur (30) au transistor de réinitialisation (10) dans une phase de calibration et d'autre part, relier la sortie du comparateur au transistor de réinitialisation via le circuit monostable dans une phase fonctionnelle.

3. Capteur (100) d'images selon l'une quelconque des revendications précédentes dans lequel les moyens de mesure (80) configurés pour mesurer la charge électrique résiduelle et les premier (Vdd) et second (Vef) niveaux électriques comprennent un convertisseur analogique numérique (60).

4. Capteur (100) d'images selon l'une quelconque des revendications précédentes dans lequel les moyens de mesure (80) comprennent un amplificateur (50) adapté pour lire la charge électrique résiduelle (34) d'un pixel et la transformer en une tension proportionnelle au cours d'une phase fonctionnelle, et adapté pour mesurer les premier et second niveaux électriques, au cours d'une phase de calibration.

5. Capteur (100) d'images selon l'une quelconque des revendications précédentes comprenant dans chaque pixel un circuit monostable (70) de rebouclage configuré pour assurer une recharge de la première capacité d'intégration Cpix (2) jusqu'au premier niveau électrique (Vdd).

6. Capteur (100) d'images selon l'une quelconque des revendications précédentes dans lequel les pixels sont disposés de sorte à former une matrice (110) de pixels composée de colonnes et de lignes de pixels, et dans lequel les moyens de mesure (80) de la charge électrique résiduelle et des premier (Vdd) et second (Vref) niveaux électriques sont communs à l'une parmi une colonne ou une ligne de la matrice (110) de pixels et sont utilisés en coopération avec des moyens de sélection de l'autre parmi une colonne ou une ligne (120) de ladite matrice (110).

7. Capteur (100) d'images selon la revendication précédente comprenant une deuxième capacité d'intégration Ccol (3) configurée pour former avec l'amplificateur (50) un circuit intégrateur de charge, la deuxième capacité d'intégration Ccol (3) étant sensiblement indépendante de la tension appliquée à ses bornes afin de produire une tension proportionnelle à la charge transférée par un pixel.

8. Capteur (100) d'images selon l'une quelconque des revendications précédentes dans lequel les moyens de conversion comprennent une diode photo sensible (1).

9. Capteur (100) d'images selon l'une quelconque des revendications précédentes dans lequel chaque pixel est de type auto réinitialisant.

10. Capteur (100) d'images selon l'une quelconque des revendications précédentes comprenant des moyens de sélection et d'isolation (54, 56) adaptés de manière à, dans chaque pixel, transférer aux moyens de mesure (80) la charge électrique résiduelle contenue dans la première capacité d'intégration Cpix (2) du pixel.

11. Capteur (100) d'images selon l'une quelconque des revendications précédentes configuré de sorte à corriger ladite valeur numérique représentative de l'énergie électromagnétique (E) captée par chaque pixel en prenant en compte la valeur Qpix définie par l'équation suivante:

$$Qpix_{num} = 2^A \cdot \left( K + \left( \frac{F - Qb}{Qa - Qb} \right) \right)$$

dans laquelle :

- Qa et Qb sont des valeurs numériques représentatives des charges minimale et maximale respectivement atteintes par la capacité d'intégration Cpix (2) de chaque pixel, mesurés par les moyens de mesure (80) lors de la phase de calibration et s'exprimant en Coulombs avec :

$$Qa = Cpix(Vréf + Voffset)$$

$$Qb = Cpix.Vdd$$

D est le nombre de bits d'un compteur compris dans les moyens de comptage (40) et comptant le nombre de cycles de charges et de décharges survenant pendant un temps d'intégration donné (Tint) ;
K est le nombre de cycles de charges et de décharges comptés par le compteur pendant un temps d'intégration donné (Tint) ;

A est le nombre de bits sur lesquels sont mesurées Qa et Qb.

12. Procédé d'acquisition d'une image par un capteur (100) d'images selon l'une quelconque des revendications précédentes **caractérisé en ce qu'**il comprend:

• au moins une phase de calibration comprenant les étapes suivantes :

- lesdits moyens de calibration du capteur (100) d'images commandent les moyens de rebouclage pour que lesdits moyens (20) agencés pour provoquer une charge de la première capacité d'intégration Cpix (2) jusqu'au premier niveau électrique (Vdd) et une décharge de la première capacité d'intégration Cpix (2) jusqu'au second niveau électrique (Vréf) établissent successivement la charge de la première capacité d'intégration du pixel au premier puis au second niveaux électriques (Vdd, Vréf), en utilisant ledit courant électrique proportionnel (Id) traversant lesdits moyens de conversion (1) pour décharger ou charger ladite première capacité d'intégration Cpix et en utilisant ledit interrupteur de réinitialisation (10) et/ou un interrupteur complémentaire (reset) pour charger ou décharger ladite première capacité d'intégration Cpix ; et
- les moyens de calibration mesurent, en utilisant lesdits moyens de mesure (80), les premier et second niveaux électriques établis ;
- les moyens de mémorisation (160) mémorisent des valeurs spécifiques à chaque pixel correspondant auxdits premier (Vdd) et second (Vréf) niveaux électriques et/ou des valeurs de correction calculées à partir desdites valeurs spécifiques,

• au moins une phase d'acquisition comprenant pour chaque pixel les étapes suivantes:

- une étape de capture d'une énergie électromagnétique (E) par les moyens de conversion (1) ;

- une étape de détermination d'une valeur numérique représentative de l'énergie électromagnétique (E) captée et dépendant dudit nombre de cycles de charges et de décharges ainsi que de ladite charge électrique résiduelle (34);
- une étape de correction de ladite valeur numérique représentative de l'énergie électromagnétique (E) captée en fonction desdites valeurs mémorisées lors de la phase de calibration.

**Patentansprüche**

**1.** Bildsensor (100), enthaltend eine Mehrzahl von Pixeln und für jedes Pixel:

- Einrichtungen (1) zum Umwandeln einer von dem Pixel erfassten elektromagnetischen Energie in einen elektrischen Strom (Id), der proportional zur Energie ist;
- einen ersten Integrationskondensator Cpix (2), der mit einem Rücksetzschalter (10) verbunden ist, und Einrichtungen (20), die dazu vorgesehen sind, ein Laden dieses ersten Integrationskondensators Cpix (2) auf ein erstes elektrisches Niveau (Vdd) und ein Entladen dieses ersten Integrationskondensators Cpix (2) auf ein zweites elektrisches Niveau (Vref) zu bewirken, wobei eines aus Entladen bzw. Laden unter Verwendung des proportionalen elektrischen Stroms (Id) erfolgt und das andere aus Laden bzw. Entladen unter Verwendung des Rücksetzschalters (10) erfolgt;
- Rückkopplungseinrichtungen, die eine automatische Wiederholung von Lade-und Entladevorgängen des ersten Integrationskondensators Cpix (2) während Lade- und Entladezyklen ermöglichen, wobei die Rückkopplungseinrichtungen einen Komparator (30) umfassen, von dem einer der Eingänge mit dem Integrationskondensator Cpix verbunden ist, wobei der Ausgang des Komparators mit dem Rücksetzschalter (10) verbunden ist; wobei Zähleinrichtungen (40) dazu ausgelegt sind, die Anzahl der Lade- und Entladezyklen zu zählen, die während einer gegebenen Integrationszeit (Tint) am ersten Integrationskondensator Cpix (2) auftreten; wobei der Sensor (100) auch Messeinrichtungen (80) zum Messen einer elektrischen Restladung (34) enthält, die am Ende der Integrationszeit in dem ersten Integrationskondensator Cpix (2) vorhanden ist, sowie Verarbeitungseinrichtungen (150), die dazu ausgelegt sind, einen numerischen Wert zu liefern, der repräsentativ ist für die elektromagnetische Energie (E), die je nach Anzahl von Lade- und Entladezyklen und je nach elektrischer Restladung (34) erfasst wird;

wobei der Sensor Kalibrierungseinrichtungen enthält,
**dadurch gekennzeichnet, dass**
die Kalibrierungseinrichtungen dazu ausgelegt sind, bei einer Kalibrierungsphase

- die Rückkopplungseinrichtungen so zu steuern, dass die genannten Einrichtungen (20), die dazu vorgesehen sind, ein Laden des ersten Integrationskondensators Cpix (2) auf ein erstes elektrisches Niveau (Vdd) und ein Entladen des ersten Integrationskondensators Cpix (2) auf ein zweites elektrisches Niveau (Vref) zu bewirken, nacheinander das Laden des ersten Integrationskondensators Cpix des Pixels auf das erste und dann auf das zweite elektrische Niveau (Vdd, Vref) bewirken unter Verwendung des proportionalen elektrischen Stroms (Id), der durch die Wandlereinrichtungen (1) fließt, um den ersten Integrationskondensator Cpix zu entladen bzw. zu laden, sowie unter Verwendung des Rücksetzschalters (10) und/oder eines komplementären Schalters, um den ersten Integrationskondensator Cpix zu laden bzw. zu entladen; und
- das erreichte erste und zweite elektrische Niveau unter Verwendung der Messeinrichtungen (80) zu messen; und

dass er Speichereinrichtungen (160) enthält, die dazu ausgelegt sind, während der Kalibrierungsphase jedem Pixel spezifische Werte abzuspeichern, die dem ersten (Vdd) und dem zweiten (Vref) elektrischen Niveau entsprechen, und/oder Korrekturwerte abzuspeichern, die ausgehend von den spezifischen Werten berechnet werden,
und dass er dazu ausgelegt ist, während einer Funktionsphase die jedem Pixel eigenen, abgespeicherten Werte zum Korrigieren des numerischen Werts zu verwenden, der repräsentativ ist für die erfasste elektromagnetische Energie (E).

**2.** Bildsensor (100) nach Anspruch 1, enthaltend in jedem Pixel eine monostabile Schaltung (70), die zwischen dem Ausgang des Komparators und dem Rücksetzschalter (10) angeordnet ist und Schalter (72, 74) enthält, die jeweils zwischen dem Rücksetzschalter (10) und der monostabilen Schaltung (70) bzw. dem Ausgang des Komparators (30) angeordnet sind, um einerseits den Ausgang des Komparators (30) direkt mit dem Rücksetztransistor (10) bei einer Kalibrierungsphase und andererseits den Ausgang des Komparators mit dem Rücksetztransistor über die monostabile Schaltung bei einer Funktionsphase zu verbinden.

3. Bildsensor (100) nach einem der vorangehenden Ansprüche, wobei die Messeinrichtungen (80), die dazu ausgelegt sind, die elektrische Restladung und das erste (Vdd) und das zweite (Vref) elektrische Niveau zu messen, einen Analog-Digital-Wandler (60) enthalten.

4. Bildsensor (100) nach einem der vorangehenden Ansprüche, wobei die Messeinrichtungen (80) einen Verstärker (50) enthalten, der dazu geeignet ist, die elektrische Restladung (34) eines Pixels auszulesen und sie in eine proportionale Spannung im Laufe einer Funktionsphase umzuwandeln, und der dazu geeignet ist, das erste und das zweite elektrische Niveau im Laufe einer Kalibrierungsphase zu messen.

5. Bildsensor (100) nach einem der vorangehenden Ansprüche, enthaltend in jedem Pixel eine monostabile Rückkopplungsschaltung (70), die dazu ausgelegt ist, ein Nachladen des ersten Integrationskondensators Cpix (2) auf ein erstes elektrisches Niveau (Vdd) sicherzustellen.

6. Bildsensor (100) nach einem der vorangehenden Ansprüche, wobei die Pixel so angeordnet sind, dass sie eine Pixelmatrix (110) bilden, die aus Spalten und Zeilen von Pixeln besteht, und wobei die Messeinrichtungen (80) zum Messen der elektrischen Restladung und des ersten (Vdd) und des zweiten (Vref) elektrischen Niveaus einer aus Spalte bzw. Zeile der Pixelmatrix (110) gemein sind und im Zusammenwirken mit Auswahleinrichtungen zum Auswählen der anderen aus Spalte bzw. Zeile (120) der Matrix (110) verwendet werden.

7. Bildsensor (100) nach dem vorangehenden Anspruch, enthaltend einen zweiten Integrationskondensator Ccol (3), der dazu ausgelegt ist, mit dem Verstärker (50) eine Ladungsintegratorschaltung zu bilden, wobei der zweite Integrationskondensator Ccol (3) im Wesentlichen unabhängig von der an seinen Anschlüssen anliegenden Spannung ist, um eine Spannung zu erzeugen, die proportional zur über ein Pixel übertragenen Ladung ist.

8. Bildsensor (100) nach einem der vorangehenden Ansprüche, wobei die Wandlereinrichtungen eine lichtempfindliche Diode (1) enthalten.

9. Bildsensor (100) nach einem der vorangehenden Ansprüche, wobei jedes Pixel vom Auto-Reset-Typ ist.

10. Bildsensor (100) nach einem der vorangehenden Ansprüche, enthaltend Auswahl- und Isoliereinrichtungen (54, 56), die dazu geeignet sind, in jedem Pixel die elektrische Restladung, die in dem ersten Integrationskondensator Cpix (2) des Pixels enthalten ist, den Messeinrichtungen (80) zu übertragen.

11. Bildsensor (100) nach einem der vorangehenden Ansprüche, wobei er dazu ausgelegt ist, den numerischen Wert, der repräsentativ ist für die von jedem Pixel erfasste elektromagnetische Energie (E), unter Berücksichtigung des Werts Qpix zu korrigieren, der durch die nachstehende Gleichung bestimmt ist:

$$Qpix_{num} = 2^A \cdot \left( K + \left( \frac{F - Qb}{Qa - Qb} \right) \right)$$

worin:

- Qa und Qb numerische Werte sind, die repräsentativ sind für eine minimale und eine maximale Ladung, die jeweils von dem Integrationskondensator Cpix (2) eines jeden Pixels erreicht werden, und über die Messeinrichtungen (80) während der Kalibrierungsphase gemessen werden und in Coulomb ausgedrückt lauten:

$$Qa = Cpix (Vref + Voffset)$$

$$Qb = Cpix \cdot Vdd$$

D die Anzahl an Bits eines Zählers ist, der in den Zähleinrichtungen (40) enthalten ist und die Anzahl an Lade- und Entladezyklen zählt, die während einer gegebenen Integrationszeit (Tint) auftreten;
K die Anzahl an Lade- und Entladezyklen ist, die von dem Zähler während einer gegebenen Integrationszeit (Tint) gezählt werden;
A die Anzahl an Bits ist, an denen Qa und Qb gemessen werden.

**12.** Verfahren zum Erfassen eines Bildes durch einen Bildsensor (100) nach einem der vorangehenden Ansprüche, **dadurch gekennzeichnet, dass** es umfasst:

• **zumindest eine Kalibrierungsphase, umfassend die nachstehenden Schritte:**

- die Kalibrierungseinrichtungen des Bildsensors (100) steuern die Rückkopplungseinrichtungen, damit die Einrichtungen (20), die dazu vorgesehen sind, ein Laden des ersten Integrationskondensators Cpix (2) auf ein erstes elektrisches Niveau (Vdd) und ein Entladen des ersten Integrationskondensators Cpix (2) auf ein zweites elektrisches Niveau zu bewirken, nacheinander das Laden des ersten Integrationskondensators des Pixels auf das erste, dann auf das zweite elektrische Niveau (Vdd, Vref) unter Verwendung des proportionalen elektrischen Stroms (Id) bewirken, der durch die Wandlereinrichtungen (1) fließt, um den ersten Integrationskondensator Cpix zu entladen bzw. zu laden, sowie unter Verwendung des Rücksetzschalters (10) und/oder eines komplementären Schalters (reset), um den ersten Integrationskondensator Cpix zu laden bzw. zu entladen; und
- die Kalibrierungseinrichtungen messen unter Verwendung der Messeinrichtungen (80) das erreichte erste und zweite elektrische Niveau;
- die Speichereinrichtungen (160) speichern jedem Pixel spezifische Werte ab, die dem ersten (Vdd) und dem zweiten (Vref) elektrischen Niveau entsprechen, und/oder Korrekturwerte, die ausgehend von den spezifischen Werten berechnet werden,

• **zumindest eine Erfassungsphase, die für jedes Pixel die nachstehenden Schritte** umfasst:

- einen Schritt des Erfassens einer elektromagnetischen Energie (E) durch die Wandlereinrichtungen (1);
- einen Schritt des Ermittelns eines numerischen Werts, der repräsentativ ist für die erfasste elektromagnetische Energie (E) und abhängig ist von der Anzahl an Lade- und Entladezyklen sowie von der elektrischen Restladung (34);
- einen Schritt des Korrigierens des numerischen Werts, der repräsentativ ist für die erfasste elektromagnetische Energie (E), in Abhängigkeit von den während der Kalibrierungsphase abgespeicherten Werten.

## Claims

**1.** Image sensor (100) comprising a plurality of pixels and comprising, for each pixel:

- means for converting (1) an electromagnetic energy (E) captured by the pixel into an electrical current proportional (Id) to said energy;
- a first Cpix integration capacity (2) connected to a reinitialising switch (10) and means (20) arranged to generate a charge from this first Cpix integration capacity (2) up to a first electrical level (Vdd) and a discharge of this first Cpix integration capacity (2) up to a second electrical level (Vref), one among said discharge or said charge being made by using the proportional electrical current (Id), the other among said charge or said discharge being made by using the reinitialising switch (10);
- re-looping means making it possible for an automatic repetition of charges and discharges of the first Cpix integration capacity (2) during charge and discharge cycles, the re-looping means including a comparator (30) of which one of the inputs is connected to the Cpix integration capacity; the output of the comparator being connected to said reinitialising switch (10); the counting means (40) being configured to count the number of charge and discharge cycles occurring for a given integration time (Tint) on the first Cpix integration capacity (2); the sensor (100) also comprising means for measuring (80) a residual electrical charge (34) present in the first Cpix integration capacity (2) from said integration time and processing means (150) configured to supply a numerical value representative of the electromagnetic energy (E) captured according to said number of charge and discharge cycles and of said residual electrical charge (34); the sensor comprises calibration means, **characterised in that** said calibration means are configured to, in a calibration phase:

- control re-looping means such that said means arranged to generate a charge from the first Cpix integration capacity (2) up to the first electrical level (Vdd) and a discharge of the first Cpix integration capacity (2) up to the second electrical level (Vref) successively establish the charge from the first Cpix integration capacity of the pixel at the first, then at the second electrical levels (Vdd, Vref), by using said proportional electrical current (Id) passing through said conversion means (1) to discharge or charge said first Cpix integration capacity and by using said one reinitialising switch (10) and/or one additional switch to charge or discharge said first Cpix integration capacity; and

- measure, by using said measuring means (80), the first and second electrical levels established; and

**in that** it comprises storage means (160) configured to store during the calibration phase, values specific to each pixel corresponding to said first (Vdd) and second (Vref) electrical levels and/or correction values calculated from said specific values, and **in that** it is configured so as to use, in a functional phase, said stored values specific to each pixel to correct said numerical value representative of the electromagnetic energy (E) captured.

2. Image sensor (100) according to claim 1, comprising in each pixel, a monostable circuit (70) placed between the output of the comparator and said reinitialising switch (10) and comprising switches (72, 74) placed between the reinitialising switch (10) and respectively the monostable circuit (70) of the output of the comparator (30) to, on the one hand, directly connect the output of the comparator (30) to the reinitialising transistor (10) in a calibration phase, and on the other hand, connect the output of the comparator to the reinitialising transistor via the monostable circuit in a functional phase.

3. Image sensor (100) according to any one of the preceding claims, wherein the measuring means (80) configured for measuring the residual electrical charge and the first (Vdd) and second (Vref) electrical levels comprise a digital analogue converter (60).

4. Image sensor (100) according to any one of the preceding claims, wherein the measuring means (80) comprise an amplifier (50) suitable for reading the residual electrical charge (34) of a pixel and for transforming it into a proportional voltage during a functional phase, and suitable for measuring the first and second electrical levels, during a calibration phase.

5. Image sensor (100) according to any one of the preceding claims, comprising in each pixel, a re-looping monostable circuit (70) configured to ensure a recharging of the first Cpix integration capacity (2) up to the first electrical level (Vdd).

6. Image sensor (100) according to any one of the preceding claims, wherein the pixels are arranged so as to form a pixel matrix (110) composed of columns and lines of pixels, and wherein the means for measuring (80) the residual electrical charge and first (Vdd) and second (Vref) electrical levels are common to one among a column or a line of the pixel matrix (110) and are used in cooperation with selection means of the other among a column or a line (120) of said matrix (110).

7. Image sensor (100) according to the preceding claim, comprising a second Ccol integration capacity (3) configured to form with the amplifier (50), a charge integrator circuit, the second Ccol integration capacity (3) being substantially independent of the voltage applied to the terminals thereof in order to produce a voltage proportional to the charge transferred by a pixel.

8. Image sensor (100) according to any one of the preceding claims, wherein the conversion means comprise a photosensitive diode (1).

9. Image sensor (100) according to any one of the preceding claims, wherein each pixel is of the self-reinitialising type.

10. Image sensor (100) according to any one of the preceding claims, comprising selection and isolation means (54, 56) suitable so as to, in each pixel, transfer to the measuring means (80), the residual electrical charge contained in the first Cpix integration capacity (2) of the pixel.

11. Image sensor (100) according to any one of the preceding claims, configured so as to correct said numerical value representative of the electromagnetic energy (E) captured by each pixel by considering the Qpix value defined by the following equation:

$$Qpix_{num} = 2^A \cdot \left( K + \left( \frac{F - Qb}{Qa - Qb} \right) \right)$$

wherein:

Qa and Qb are numerical values representative of minimum and maximum charges respectively reached by the Cpix integration capacity (2) of each pixel, measured by the measuring means (80) during the calibration phase and being expressed in Coulombs with:

$$Qa = Cpix(Vref + Voffset)$$

$$Qb = Cpix.Vdd$$

D is the number of bits of a counter comprised in the counting means (40) and counting the number of charge and discharge cycles occurring for a given integration time (Tint);

K is the number of charge and discharge cycles counted by the counter for a given integration time (Tint);

A is the number of bits on which Qa and Qb are measured.

12. Method for acquiring an image by an image sensor (100) according to any one of the preceding claims, **characterised in that** it comprises:

* at least one calibration phase comprising the following steps:

- said calibration means of the image sensor (100) control the re-looping means such that said means (20) arranged to generate a charge from the first Cpix integration capacity (2) up to the first electrical level (Vdd) and a discharge of the first Cpix integration capacity (2) up to the second electrical level (Vref) successively establish the charge from the first integration capacity of the pixel at the first then at the second electrical levels (Vdd, Vref), by using said proportional electrical current (Id) passing through said conversion means (1) to discharge or charge said first Cpix integration capacity and by using said reinitialising switch (10) and/or a complementary (reset) switch to charge or discharge said first Cpix integration capacity; and
- the calibration means measure, by using said measuring means (80), the first and second electrical levels established;
- the storage means (160) store values specific to each pixel corresponding to said first (Vdd) and second (Vref) electrical levels and/or correction values calculated from said specific values,

* at least one acquisition phase comprising for each pixel, the following steps:

- a step of capturing an electromagnetic energy (E) by the conversion means (1);
- a step of determining a numerical value representative of the captured electromagnetic energy (E) and depending on said number of charge and discharge cycles, as well as said residual electrical charge (34);
- a step of correcting said numerical value representative of the captured electromagnetic energy (E), according to said values stored during the calibration phase.

EP 2 687 020 B1

# Art Antérieur

E = h.v

Figure 1

Figure 2

Figure 3

Figure 4

100

120 — Sélecteur de Ligne

110

52

160

130 — Amplificateurs

140 — Convertisseurs Analogique Numérique

150 — Autres Circuits Périphériques

Mémoire de Corrections

## Figure 5

210

### Sans Calibration

Nombre de mesures / Nombre de coups d'erreur

$$Qpix_{num} = 2^A.K + F$$

212

220

### Avec Calibration
### (après mesure de Qa et Qb)

Nombre de mesures / Nombre de coups d'erreur

$$Qpix_{num} = 2^A\left(K + \left(\frac{F - Qb}{Qa - Qb}\right)\right)$$

222

## Figure 6

Figure 7

**EP 2 687 020 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100194956 A1
- EP 09005971 A